# EUROPÄISCHE PATENTSCHRIFT

(11) **EP 3 285 917 B1**
(45) Veröffentlichungstag und Bekanntmachung des Hinweises auf die Patenterteilung: **13.03.2019**
(21) Anmeldenummer: 16720063.3
(22) Anmeldetag: 19.04.2016
(51) Int. Cl.: B01J 8/00, G01K 1/14, G01K 13/10, G01K 13/02

(54) **TEMPERATURMESSEINRICHTUNG MIT KORBFEDER**
TEMPERATURE MEASUREMENT DEVICE WITH CAGE SPRING
DISPOSITIF DE MESURE DE TEMPÉRATURE MUNI D'UN RESSORT À BARILLET

(30) Priorität: 24.04.2015 DE 102015106385
(43) Veröffentlichungstag der Anmeldung: 28.02.2018
(73) Patentinhaber: Krick Messtechnik & Partner GmbH & Co. KG, 63505 Langenselbold (DE)
(72) Erfinder: KRICK, Herbert, 61209 Echzell (DE); JAHN, Robert, 63517 Rodenbach (DE)
(74) Vertreter: Schultheiss & Sterzel Patentanwälte PartG mbB
(86) Internationale Anmeldenummer: PCT/EP2016/058631
(87) Internationale Veröffentlichungsnummer: WO 2016/169922

(56) Entgegenhaltungen:
- CN-U- 203 061 164
- US-A- 3 656 914

## Beschreibung

Die Erfindung betrifft eine Temperaturmesseinrichtung zur Temperaturerfassung in einem Rohr eines Röhrenreaktors. Die Erfindung betrifft auch eine Temperaturmessvorrichtung aufweisend mehrere solche Temperaturmesseinrichtungen, einen Röhrenreaktor aufweisend wenigstens ein Rohr und zumindest eine solche Temperaturmesseinrichtung und ein Verfahren zum Einsetzen einer Temperaturmesseinrichtung in ein Rohr
Solche Temperaturmesseinrichtungen werden unter anderem und insbesondere bei der katalytischen Oxidation organischer Verbindungen in Röhrenreaktoren verwendet, beispielsweise zur Herstellung von Stoffen wie Epoxiden, wie bei der Herstellung von Propylenoxiden. Aus der EP 1 247 806 A1 ist ein Verfahren zur Epoxidierung von Olefinen bekannt, bei dem die Maximaltemperatur in einem Katalysator mit einer Vielzahl von Temperaturmesseinrichtungen beziehungsweise Thermoelementen gemessen wird, die entlang der Achse eines rohrförmigen Reaktors mit gleichmäßigen Abständen zueinander angeordnet werden. Die Anzahl der Thermoelemente und deren Positionierung sind dabei auf die Messanforderungen und den jeweils verwendeten Reaktor abgestimmt.

Die WO 2005/068 062 A1 offenbart einen Rohrbündelreaktor, mit dem kontinuierlich eine chemische Verbindung herstellbar ist und bei dem die Temperatur im Reaktor eine entscheidende Größe zur Umsetzung der chemischen Substanzen ist. Zur Steuerung solcher Röhrenreaktoren müssen verlässliche Daten zur aktuellen Temperatur in den Rohren des Reaktors gewonnen werden. Hierfür können erfindungsgemäße Temperaturmesseinrichtungen verwendet werden. Aus der US 3 656 914 A ist ein Röhrenreaktor mit mehreren fest eingebauten Temperatursensoren, die in axialen Nuten in der Innenwand der Röhre angeordnet sind. Die CN 203 061 164 U offenbart einen Temperatursensor der über einen Stutzen seitlich in ein Rohr eingeführt ist und dort federnd gelagert sein kann. Die EP2075058 offenbart eine Temperaturmesseinrichtung zur Temperaturerfassung in einem Rohr eines Röhrenreaktors, wobei die Temperaturmesseinrichtung einen Temperatursensor umfasst, der an einem federnden Element befestigt ist.

Die bekannten Temperatursensoren haben den Nachteil, dass sie manuell an der Innenwand der Rohre befestigt werden müssen. Hierfür müssen entweder die Rohre ausgetauscht oder geöffnet werden. Dies ist vor allem dann nachteilig, wenn defekte Temperatursensoren ausgetauscht werden müssen. Der Austausch führt dann nämlich zu einem Stillstand des gesamten Röhrenreaktors, der bis zum Abschluss des Tauschs dauert.

Die Aufgabe der Erfindung besteht darin, die Nachteile des Stands der Technik zu überwinden. Insbesondere soll eine Temperaturmesseinrichtung bereitgestellt werden, die sich leicht und schnell in ein Rohr eines Röhrenreaktors beziehungsweise Rohrbündelreaktors einbauen und ausbauen lässt und damit schnell wechseln lässt, um die Standzeit des Röhrenreaktors beziehungsweise Rohrbündelreaktors zu minimieren. Gleichzeitig soll die Temperaturmesseinrichtung kostengünstig im Aufbau sein. Die Positionierung der Temperaturmesseinrichtung soll zuverlässig sein, ohne dass die Gefahr besteht, dass sich die Position der Messspitze im Rohr ändert. Insbesondere soll sich die Position der Messspitze des Temperatursensors der Temperaturmesseinrichtung beim Befüllen des Rohrs mit einem Katalysatorgranulat oder Katalysatorpulver nicht verändern. Des Weiteren soll die positionierte Temperaturmesseinrichtung einen möglichst geringen Strömungswiderstand für das einzufüllende Katalysatorgranulat oder Katalysatorpulver bilden, so dass das Katalysatorgranulat oder das Katalysatorpulver sich nicht im Bereich der Temperaturmesseinrichtung staut oder blockiert.

Es ist auch Aufgabe der vorliegenden Erfindung eine Temperaturmessvorrichtung für einen Rohrbündelreaktor bereitzustellen oder für einen Röhrenreaktor, in dem mehrere Temperaturmessstellen in einem Rohr hintereinander oder in verschiedenen Rohren angeordnet werden müssen und die die im Zusammenhang mit der Temperaturmesseinrichtung formulierten Aufgaben löst. Eine weitere Aufgabe der vorliegenden Erfindung liegt darin, einen Röhrenreaktor, insbesondere einen Rohrbündelreaktor, mit zumindest einer Temperaturmesseinrichtung bereitzustellen, die sich leicht wechseln lässt und somit die oben genannten Vorteile aufweist. Ferner hat die vorliegende Erfindung die Aufgabe ein Verfahren anzugeben, mit dem eine Temperaturmesseinrichtung schnell und kostengünstig eingesetzt beziehungsweise gewechselt werden kann. Zudem soll die Positionierung zuverlässig und genau erfolgen.

Die Aufgaben der Erfindung werden gelöst durch eine Temperaturmesseinrichtung zur Temperaturerfassung in einem Rohr eines Röhrenreaktors, wobei die Temperaturmesseinrichtung einen Temperatursensor und eine Korbfeder aufweist, wobei der Temperatursensor zumindest eine Temperaturmessstelle und zumindest zwei Leitungen zur elektrischen Kontaktierung der zumindest einen Temperaturmessstelle aufweist, wobei an der Korbfeder eine erste Halterung für den Temperatursensor befestigt ist, wobei der Temperatursensor mit der ersten Halterung fest verbunden ist.

Die Leitungen sind bevorzugt in einem gemeinsamen Kabel angeordnet. Das Kabel ist insbesondere als Mantelleitung ausgeführt.

Bevorzugt weist die Korbfeder eine Drehsymmetrieachse auf. Diese Drehsymmetrieachse entspricht der Zylinderachse des Rohrs des Röhrenreaktors, in das die Temperaturmesseinrichtung eingebaut ist, beziehungsweise in das die Temperaturmesseinrichtung einzubauen ist. Unter einer Drehsymmetrieachse im Sinne der vorliegenden Erfindung ist eine ganzzahlige Drehsymmetrie oder eine Rotationssymmetrie zu verstehen, insbesondere eine geradzahlige Drehsymmetrie zu verstehen. Bevorzugt ist die Drehsymmetrieachse zur Umsetzung der vorliegenden Erfindung eine vierzählige bis zwanzigzählige Drehsymmetrie. Die Drehsymmetrieachse erstreckt sich, zur Definition und Kennzeichnung der Lage von Bauteilen der Temperaturmesseinrichtung, auch über die Korbfeder hinaus.

Die erste Halterung kann im einfachsten Fall ein Teil der Korbfeder sein. Theoretisch kann der Temperatursensor auch an den federnden Teilen oder an einem federnden Teil der Korbfeder befestigt sein, wobei diese federnden Teile oder das federnde Teil dann eine erste Halterung im Sinne der vorliegenden Erfindung bilden beziehungsweise bildet. Bevorzugt ist die Halterung durch ein nicht federndes Teil der Korbfeder oder an der Korbfeder gebildet, damit sich die Halterung beim Strecken der Korbfeder möglichst nicht verformt.

Bevorzugt ist die Temperaturmessstelle an einem Ende des Temperatursensors angeordnet.

Die Korbfeder hat eine lineare Federachse, so dass bei einer Auslenkung beziehungsweise bei Anregung der Korbfeder in dieser linearen Richtung die Korbfeder entlang dieser linearen Federachse eine lineare Oszillation ausführt.

Erfindungsgemäß kann auch vorgesehen sein, dass die Temperaturmessstelle zentrisch bezogen auf eine Mittelachse der gestreckten Korbfeder angeordnet ist und/oder die Temperaturmessstelle zentrisch bezogen auf die Zylinderachse eines zumindest bereichsweise zylindrischen Rohrs des Röhrenreaktors angeordnet ist, in das die Temperaturmesseinrichtung einzusetzen ist oder eingesetzt ist.

Die Mittelachse der gestreckten Korbfeder ist die Achse, in der die Korbfeder bestimmungsgemäß linear federt, wobei sich die Mittelachse durch den Schwerpunkt beziehungsweise das geometrische Zentrum der Korbfeder erstreckt. Bei den meisten Korbfedern und erfindungsgemäß bevorzugt fällt die Federachse mit einer Drehsymmetrieachse der Korbfeder zusammen. Bevorzugt ist die Temperaturmessstelle auf der Federachse und/oder Drehsymmetrieachse der vollständig elastisch gestreckten Korbfeder angeordnet. Dadurch ist die Temperaturmessstelle im eingesetzten Zustand der Temperaturmesseinrichtung auf der Zylinderachse des Rohrs angeordnet.

Hierdurch wird sichergestellt, dass sich die Temperaturmessstelle im Zentrum (auf der Symmetrieachse) des Rohrs des Röhrenreaktors befindet. Dadurch kann die Temperatur im Zentrum des Rohrs des Röhrenreaktors bestimmt werden.

Des Weiteren kann vorgesehen sein, dass sich die Temperaturmessstelle an einem Ende des Temperatursensors befindet und sich der Temperatursensor von der ersten Halterung am äußeren Umfang der Temperaturmesseinrichtung in Richtung einer Mittelachse der Korbfeder erstreckt, so dass die Temperaturmessstelle im Bereich der Federachse der Korbfeder positioniert ist. Genaugenommen ist die Temperaturmessstelle im Bereich einer Verlängerung der Federachse der Korbfeder positioniert.

Mit diesem Aufbau wird erreicht, dass die Leitungen des Temperatursensors beziehungsweise das Kabel, das die Leitungen des Temperatursensors enthält, nicht das Innere des Rohrs blockieren. Damit ist es möglich ein Katalysatorgranulat oder Katalysatorpulver in das Rohr zu füllen, nachdem die Temperaturmesseinrichtung in das Rohr eingesetzt wurde, wobei die Gefahr für ein Verstopfen des Rohrs durch das Katalysatorgranulat oder das Katalysatorpulver beim Einfüllen reduziert oder sogar minimiert ist.

Mit einer Weiterbildung der vorliegenden Erfindung wird vorgeschlagen, dass die erste Halterung ringförmig ist, insbesondere rohrförmig ist. Es kann vorgesehen sein, dass an der ersten Halterung zumindest ein Befestigungsmittel vorgesehen ist. Insbesondere ist zumindest eine Längsnut vorgesehen, die sich parallel zu der linearen Federachse der Korbfeder erstreckt. Besonders bevorzugt sind zwei Längsnuten vorgesehen, die sich parallel zu der linearen Federachse der Korbfeder erstrecken.

Durch die Ringform beziehungsweise Rohrform der ersten Halterung ist die Temperaturmesseinrichtung an die Form des Rohrs des Röhrenreaktors angepasst. Hierdurch kann ein Verkanten der Temperaturmesseinrichtung beim Einführen in das Rohr vermieden werden. In das zumindest eine Befestigungsmittel beziehungsweise die Längsnut kann eine Einführhilfe, beispielsweise in Form einer Stange oder eines Drahts mit zumindest einem Haken am Ende oder auch in Form eines steifen Seils mit zumindest einem Haken am Ende, greifen, mit dem die Temperaturmesseinrichtung in das Rohr eingeführt beziehungsweise eingezogen wird. Der zumindest eine Haken kann dann durch Einschieben der Einführhilfe gegen die Temperaturmesseinrichtung nach der gewünschten Positionierung der Temperaturmessstelle aus der zumindest einen Längsnut gelöst werden. Anschließend wird die Einführhilfe aus dem Rohr herausgezogen.

Dabei kann vorgesehen sein, dass die erste Halterung einen Außendurchmesser hat, der um maximal 1 mm kleiner ist als der Innendurchmesser des Rohrs des Röhrenreaktors, bevorzugt um maximal 0,4 mm kleiner ist als der Innendurchmesser des Rohrs des Röhrenreaktors.

Hierdurch wird sichergestellt, dass die Halterung und damit die Temperaturmesseinrichtung im Rohr nicht verkannten und gleichzeitig dem einzufüllenden Katalysatorgranulat möglichst wenig Widerstand bieten beziehungsweise das Einfüllen des Katalysatorgranulats möglichst wenig behindern.

Erfindungsgemäß kann auch vorgesehen sein, dass die vollständig gestreckte Korbfeder einen Außendurchmesser aufweist, der um maximal 1 mm kleiner ist als der Innendurchmesser des Rohrs des Röhrenreaktors, bevorzugt um maximal 0,4 mm kleiner ist als der Innendurchmesser des Rohrs des Röhrenreaktors.

Hierdurch wird erreicht, dass die Korbfeder fest im Rohr des Röhrenreaktors sitzt. Damit kann ein ungewolltes Verschieben des Temperatursensors beim Einfüllen des Katalysatorgranulats verhindert werden.

An der ersten Halterung kann erfindungsgemäß ein Röhrchen oder eine Aufnahme zur Befestigung des Temperatursensors vorgesehen sein. Das Röhrchen oder die Aufnahme ist bevorzugt an der Innenseite der ersten Halterung angeschweißt und der Mantel des Kabels des Temperatursensors ist an dem Röhrchen oder der Aufnahme befestigt, beispielsweise eingeklebt oder angeschweißt.

Eine besonders leicht einzusetzende und erfindungsgemäße besonders bevorzugte Temperaturmesseinrichtung kann sich dadurch auszeichnen, dass an der Korbfeder eine zweite Halterung befestigt ist, wobei die Korbfeder zwischen der ersten Halterung und der zweiten Halterung angeordnet ist, so dass die Halterungen über die Korbfeder miteinander verbunden sind, wobei vorzugsweise der Temperatursensor mit der zweiten Halterung gleitend verbunden ist.

Wenn der Temperatursensor mit der zweiten Halterung fest verbunden ist, muss er derart geformt sein, dass er eine Streckung der Korbfeder ausgleichen kann. Hierzu kann es vorgesehen sein, dass die Leitungen zwischen den Halterungen nicht in gerader Linie liegen. Beispielsweise können die Leitungen hierzu nach Art einer elastischen Feder geformt sein. Bevorzugt ist der Temperatursensor jedoch mit der zweiten Halterung gleitend verbunden, da jede federnde Ausrichtung der Leitung, die nicht parallel zur Achse des Rohrs verläuft, eine Blockade beziehungsweise einen Stau des Katalysatorgranulats beim Befüllen des Rohrs mit der Temperaturmesseinrichtung darin begünstigt.

Hierdurch kann sichergestellt werden, dass sich die Korbfeder strecken lässt, ohne dass der Temperatursensor die Streckung der Korbfeder blockiert. Zudem kann bei geeigneter Form der zweiten Halterung, beispielsweise als Ring oder als Rohrstück mit einem geringeren Außendurchmesser als das Rohr, sichergestellt werden, dass die Leitungen des Temperatursensors auch im Bereich der zweiten Halterung nicht in die Mitte des Rohrs gelangen, wo sie ein Einfüllen des Katalysatorgranulats stören könnten.

Dabei kann vorgesehen sein, dass die zweite Halterung einen Außendurchmesser hat, der um maximal 1 mm kleiner ist als der Innendurchmesser des Rohrs des Röhrenreaktors, bevorzugt um maximal 0,4 mm kleiner ist als der Innendurchmesser des Rohrs des Röhrenreaktors.

Es wird auch vorgeschlagen, dass die zweite Halterung ringförmig ist, insbesondere rohrförmig ist, wobei bevorzugt an der zweiten Halterung zumindest ein Befestigungsmittel vorgesehen ist, die sich parallel zu der linearen Federachse der Korbfeder erstreckt, besonders bevorzugt zwei Längsnuten vorgesehen sind, die sich parallel zu der linearen Federachse der Korbfeder erstrecken. Es reicht aus und ist erfindungsgemäß bevorzugt, dass an der zweiten Halterung ein Befestigungsmittel (wie beispielsweise die Längsnut) zur Befestigung einer Einführhilfe vorgesehen ist, mit der die Temperaturmesseinrichtung in das Rohr eingezogen werden kann.

Durch die Ringform der zweiten Halterung ist die Temperaturmesseinrichtung an die Form des Rohrs des Röhrenreaktors angepasst. Hierdurch kann ein Verkanten der Temperaturmesseinrichtung beim Einführen in das Rohr vermieden werden. In die Längsnut kann die Einführhilfe, beispielsweise in Form einer Stange oder eines Drahts mit zumindest einem Haken am Ende oder auch eines steifen Seils mit zumindest einem Haken am Ende, greifen, mit dem die Temperaturmesseinrichtung in das Rohr eingeführt beziehungsweise eingezogen wird. Bevorzugt wird die Einführhilfe mit der in Einführrichtung vorderen Halterung, bevorzugt der vorne angeordneten zweiten Halterung verbunden, damit die Korbfeder durch ziehen an der vorderen (zweiten) Halterung und durch auftretende Reibungskräfte gestreckt und nicht gestaucht wird, wodurch das Einführen der Temperaturmesseinrichtung in das Rohr beziehungsweise das Bewegen der Temperaturmesseinrichtung in dem Rohr vereinfacht wird. Der zumindest eine Haken der Einführhilfe kann dann durch Einschieben der Einführhilfe in das Rohr nach der gewünschten Positionierung der Temperaturmessstelle aus der zumindest einen Längsnut gelöst werden. Anschließend wird die Einführhilfe aus dem Rohr herausgezogen.

Gemäß einer Ausführung der Erfindung kann vorgesehen sein, dass eine Sicherungseinrichtung vorgesehen ist, mit der die Korbfeder in einem gestreckten Zustand gespannt zu halten ist, um die Korbfeder gleitend in einem Rohr des Röhrenreaktors positionieren zu können. Dabei kann bevorzugt vorgesehen sein, dass die Sicherungseinrichtung in das zumindest eine Befestigungsmittel der zweiten Halterung greift, wenn dieses vorgesehen ist. Ferner kann vorgesehen sein, dass die Sicherungseinrichtung in das zumindest eine Befestigungsmittel der zweiten Halterung und besonders bevorzugt auch in zumindest ein Befestigungsmittel der ersten Halterung greift.

Hierdurch wird die Montage beziehungsweise das Einführen und die Positionierung der Temperaturmesseinrichtung im Rohr vereinfacht. Zum Lösen der Sicherungseinrichtung kann ein Bedienelement bedient werden, das über einen Draht, ein Kabel oder einen Seilzug mit der Sicherungseinrichtung verbunden ist und das sich außerhalb des Rohrs befindet.

Gemäß einer bevorzugten Weiterbildung der Erfindung kann vorgesehen sein, dass die Temperaturmesseinrichtung eine Einführhilfe aufweist, die an der Korbfeder und/oder der zweiten Halterung lösbar befestigt ist oder zu befestigen ist, so dass ohne Krafteinwirkung auf die Einführhilfe oder nach Lösen der Einführhilfe die Korbfeder entspannt und die Korbfeder sich radial ausdehnt und/oder sich an die Innenwand des Rohrs anpresst. Dabei positioniert die Korbfeder den Temperatursensor in dem Rohr, insbesondere zentriert die Korbfeder den Temperatursensor in dem Rohr, wobei bevorzugt die Einführhilfe ein Zugdraht mit zumindest einem Haken zum Befestigen in einem Befestigungsmittel an der ersten Halterung, der zweiten Halterung und/oder an der Korbfeder ist.

Hierdurch wird die Positionierung der Temperaturmesseinrichtung im Rohr weiter vereinfacht. Die Temperaturmesseinrichtung kann so einfach in das Rohr eingezogen werden und wird dabei gespannt. Dazu ist die Einführhilfe beziehungsweise der Zugdraht bezüglich der Einführrichtung der Temperaturmesseinrichtung vor der Korbfeder befestigt oder eingehakt. Beim Ziehen streckt sich die Korbfeder und kann ohne weiteres in das Rohr eingezogen werden. Die Einführhilfe beziehungsweise der Zugdraht wird nach dem Einsetzen der Temperaturmesseinrichtung von der Korbfeder und/oder der Halterung gelöst und aus dem Rohr herausgezogen. Wenn ein Wechsel der Temperaturmesseinrichtung notwendig ist, wird die Temperaturmesseinrichtung nach Entfernen des umgebenden Katalysatorgranulats aus dem Rohr entfernt, indem sie an den Leitungen des Temperatursensors entgegen der Einschubrichtung herausgezogen wird. Hierzu ist die erste Halterung, an der der Temperatursensor befestigt ist, vorzugsweise in Einführrichtung hinter der Korbfeder angeordnet, so dass sich die Korbfeder beim Ziehen an den Leitungen des Temperatursensors streckt.

Anstatt einem Zugdraht kann auch ein Schubdraht oder eine Schubstange als Einführhilfe verwendet werden, mit dem die Temperaturmesseinrichtung in das Rohr geschoben wird. Auch in diesem Fall greift die Schubstange oder der Schubdraht bevorzugt am vorderen Ende der Temperaturmesseinrichtung, also in Einführrichtung vor der Korbfeder ein, so dass beim Einschieben der Temperaturmesseinrichtung die Korbfeder gestreckt wird und so leichter im Rohr gleiten kann.

Des Weiteren kann vorgesehen sein, dass an der Korbfeder, an der ersten Halterung und/oder der zweiten Halterung, bevorzugt an der zweiten Halterung, ein Befestigungsmittel zum lösbaren Befestigen einer Einführhilfe vorgesehen ist. Hierzu reicht bereits eine einfache Öse aus.

Hierdurch kann die Temperaturmesseinrichtung leichter in ein Rohr eingezogen oder eingeschoben werden. Dazu ist die Einführhilfe zunächst mit dem Befestigungsmittel lösbar verbunden. Die Temperaturmesseinrichtung wird mit Hilfe der Einführhilfe in dem Rohr positioniert. Anschließend wird die Einführhilfe von dem Befestigungsmittel gelöst und aus dem Rohr herausgezogen.

Es ist erfindungsgemäß bevorzugt, wenn der Temperatursensor ein Thermoelement ist, insbesondere ein Mantel-Thermoelement, und die Leitungen Thermodrähte und/oder Temperaturausgleichsdrähte aufweisen.

Besonders bevorzugt ist das Thermoelement ein NiCr/Ni-Thermoelement (Typ K). Alternativ zur Verwendung von Thermoelementen kommen auch Temperaturmesswiderstände zum Aufbau des Temperatursensors in Frage. Thermoelemente sind gebräuchlich und zur Messung der Temperaturen und für die Anwendung in Röhrenreaktoren besonders gut geeignet.

Es kann auch vorgesehen sein, dass ein Verstärkungsrohr mit den Leitungen des Temperatursensors verbunden ist, insbesondere versickt ist, wobei das Verstärkungsrohr mit der ersten Halterung fest verbunden ist und wobei vorzugsweise das Verstärkungsrohr in einem Gleitlager der zweiten Halterung gleitend gelagert ist.

Hierdurch wird verhindert, dass die Leitungen des Temperatursensors zu stark mechanisch belastet werden. Ferner kann so sichergestellt werden, dass sich die Leitungen beim Einfüllen des Katalysatorgranulats nicht verformen und dabei ein weiteres Befüllen des Rohres behindern.

Ferner kann vorgesehen sein, dass die Leitungen des Temperatursensors durch eine biegbare Mantelleitung realisiert sind.

Hierdurch wird eine ausreichende Steifigkeit des Temperatursensors erreicht, ohne dass sich die Leitungen im Rohr beliebig bewegen könnten und dabei unerwünschte Schlaufen im Rohr bilden, in denen sich das Katalysatorgranulat verfangen kann.

Die der vorliegenden Erfindung zugrundeliegenden Aufgaben werden auch gelöst durch eine Temperaturmessvorrichtung aufweisend mehrere erfindungsgemäße Temperaturmesseinrichtungen wobei die Temperaturmessvorrichtung zumindest zwei Temperatursensoren und zumindest zwei Korbfedern aufweist, wobei jeder Temperatursensor mit je einer Korbfeder verbunden ist.

Hierdurch können mehrere Rohre eines Röhrenreaktors mit der Temperaturmessvorrichtung bestückt werden, um die Temperatur darin zu messen. Alternativ und bei geeigneter Führung der Leitungen der Temperaturmesseinrichtungen können auch in ein Rohr an mehreren Stellen im Rohr Temperaturmesseinrichtungen positioniert werden, um die Temperatur an mehreren Stellen des Rohrs zu bestimmen.

Die der vorliegenden Erfindung zugrundeliegenden Aufgaben werden auch gelöst durch einen Röhrenreaktor, insbesondere Rohrbündelreaktor, aufweisend wenigstens ein Rohr und zumindest eine erfindungsgemäße Temperaturmesseinrichtung, wobei die zumindest eine Temperaturmesseinrichtung in dem wenigstens einen Rohr angeordnet ist, wobei vorzugsweise ein Katalysator in dem wenigstens einen Rohr enthalten ist, so dass die Temperaturmessstelle von dem Katalysator umgeben ist oder die Temperaturmessstellen von dem Katalysator umgeben sind.

Bevorzugt ist der Katalysator ein Katalysatorpulver oder ein Katalysatorgranulat, das in das wenigstens eine Rohr des Röhrenreaktors eingefüllt ist.

Die der Erfindung zugrundeliegenden Aufgaben werden ferner gelöst durch ein Verfahren zum Einsetzen einer Temperaturmesseinrichtung, in ein Rohr, gekennzeichnet durch die chronologischen Schritte:
A) Befestigen eines Temperatursensors an einer ersten Halterung, wobei die erste Halterung an einer Korbfeder befestigt ist;
B) Einführen der gespannten und gestreckten Korbfeder mit dem Temperatursensor in ein Rohr;
C) Positionieren der Korbfeder in dem Rohr;
D) Fixieren der Korbfeder in dem Rohr, wobei sich die Korbfeder radial ausdehnt und/oder an die Innenwand des Rohrs anpresst und dadurch die Korbfeder und damit der Temperatursensor in dem Rohr fixiert werden.

Das erfindungsgemäße Verfahren ist vorzugsweise zum Einsetzen einer erfindungsgemäßen Temperaturmesseinrichtung geeignet.

Das Rohr ist vorzugsweise Teil eines Röhrenreaktors, insbesondere Rohrbündelreaktors. Bevorzugt wird die Korbfeder in das Rohr eingezogen oder eingeschoben. Das Spannen der Korbfeder erfolgt bevorzugt durch Verwenden einer Einführhilfe, insbesondere durch Ziehen an einem Zugdraht oder an einem Zugseil oder einer Stange, der oder die oder das in die Korbfeder und/oder zumindest ein Befestigungsmittel eingehakt ist.

Bei erfindungsgemäßen Verfahren kann vorgesehen sein, dass die Korbfeder mit einer Sicherungseinrichtung oder einer Einführhilfe gespannt wird und die Korbfeder durch Lösen der Sicherungseinrichtung oder der Einführhilfe von der Korbfeder und/oder einer zweiten Halterung entspannt wird, wobei die zweite Halterung an der der ersten Halterung gegenüberliegenden Seite der Korbfeder befestigt ist.

Hierdurch wird das Einführen und Positionieren der Temperaturmesseinrichtung vereinfacht.

Es wird auch vorgeschlagen, dass ein Katalysator, insbesondere ein Katalysatorgranulat und/oder ein Katalysatorpulver, in das Rohr gefüllt wird beziehungsweise werden, nachdem die Korbfeder und der Temperatursensor durch Entspannen der Korbfeder in dem Rohr fixiert worden sind. Die Entspannung der Korbfeder erfolgt, indem keine Kraft mehr auf die vordere Halterung der Korbfeder ausgeübt wird, bevorzugt indem nicht mehr an der Einführhilfe gezogen wird.

In dieser Reihenfolge ist ein leichtes Positionieren der Temperaturmesseinrichtung im Rohr möglich. Der Reaktor wird zudem nur durch das Einfüllen des Katalysators verwendbar.

Es kann ferner vorgesehen sein, dass vor dem Positionieren der gespannten und gestreckten Korbfeder in dem Rohr eine bereits in dem Rohr enthaltene Temperaturmesseinrichtung aus dem Rohr herausgezogen wird, vorzugsweise indem die Temperaturmesseinrichtung an Leitungen beziehungsweise dem Kabel des Temperatursensors aus dem Rohr herausgezogen wird.

Hierdurch wird der komplette Wechsel der Temperaturmesseinrichtung mit dem erfindungsgemäßen Verfahren durchgeführt.

Der Erfindung liegt die überraschende Erkenntnis zugrunde, dass es durch die Verwendung einer Korbfeder, die an einem Temperatursensor befestigt ist, gelingt, eine schnell und einfach einzusetzenden und zu fixierende Temperaturmesseinrichtung bereitzustellen, die in ein Rohr eines Röhrenreaktors eingeführt werden kann. Beim Entspannen der Korbfeder drückt der Bauch der Korbfeder am radialen Umfang von Innen an die Innenwandung des Rohrs und fixiert dabei die Temperaturmesseinrichtung und damit den Temperatursensor. Gleichzeitig wird der freie Innenquerschnitt durch die rohförmige Korbfeder kaum beeinträchtigt, so dass der Katalysator leicht in das Rohr eingefüllt werden kann, ohne dass der Katalysator (beziehungsweise das Katalysatorgranulat oder das Katalysatorpulver) an der Korbfeder blockiert beziehungsweise sich staut. Wenn der Temperatursensor der Temperaturmesseinrichtung nicht mehr funktioniert und daher gewechselt werden muss, kann mit der erfindungsgemäßen Temperaturmesseinrichtung beziehungsweise der erfindungsgemäßen Temperaturmessvorrichtung, dem erfindungsgemäßen Röhrenreaktor und dem erfindungsgemäßen Verfahren ein schneller und einfacher Wechsel erfolgen, ohne eine lange Standzeit des Röhrenreaktors zu verursachen. Zudem kann der Wechsel auch von einfachen Angestellten durchgeführt werden, da eine besondere technische Ausbildung zum Wechsel nicht notwendig ist.

Bei der Korbfeder handelt es sich bevorzugt um einen aus Federstahlblech gebogenen Zylinder. Im Mittelteil dieses Zylinders ist, zur Maximierung der Federwirkung eine mehrfache Durchbrechung ausgeführt. Der Bereich dieser Durchbrechung wird dann mittels einer Stauchung des Zylinders in der Längsachse nach Außen gewölbt. Die nach Außen gewölbten Stege (der Korb) sind dazu geeignet durch ihre Federspannung in radialer Richtung Bauteile zentrisch in einem zylinderförmigen Körper zu fixieren.

Eine Korbfeder weist also bevorzugt nach außen gewölbte Stege auf, die einen Korb der Korbfeder bilden.

Die Funktionsweise der Korbfeder ist wie folgt: Zum Einbau wird die Korbfeder durch axialen zug gespannt. Im angespannten Zustand reduziert sich der Außendurchmesser auf das ursprüngliche Zylindermaß. Die Korbfeder kann nun in einen zylindrischen Körper wie ein Katalysatorrohr eingeführt werden. Durch aufgabe der Spannung weitet sich die Korbfeder wieder radial auf und fixiert sich in dem zylindrischen Körper.

Erfindungsgemäße Temperaturmesseinrichtungen werden in Rohren von Röhrenreaktoren oder Rohrbündelreaktoren zur Temperaturmessung bei HPPO-Verfahren (Hydrogen-Peroxide-Propylene-Oxide-Verfahren) zur Herstellung von Propylenoxid verwendet. Bei diesem der Prileschajew-Reaktion (Oxiran-Verfahren) ähnlichen HPPO-Verfahren erfolgt die Umsetzung des Propylens mit Wasserstoffperoxid (englisches Kürzel HP):

C₃H₆ + H₂O₂ → C₃H₆O + H₂O

Bei diesem HPPO-Verfahren entsteht als einziges Nebenprodukt Wasser. Ein hierfür geeigneter Rohrbündelreaktor ist beispielsweise aus der WO 2005/068 062 A1 bekannt.

Bei der Durchführung eines HPPO-Verfahrens kann die Maximaltemperatur im Katalysator mit mehreren erfindungsgemäßen Temperaturmesseinrichtungen gemessen werden, die beispielsweise Thermoelemente Typ K oder Pt-100 aufweisen und die ungefähr entlang der Achse des vorzugsweise rohrförmigen Reaktors in geeigneten Abständen mit Bezug zueinander angeordnet sind. Die Anzahl und Lage im Reaktor und die Abstände zwischen den Temperaturmesseinrichtungen werden dabei so eingestellt, dass die Temperatur des Katalysators im gesamten Reaktor so genau wie notwendig gemessen werden kann. Die gemessenen Temperaturen können dann zur Regelung des Reaktors verwendet werden, wie dies beispielsweise in der EP 1 247 806 A1 beschrieben ist.

Im Folgenden werden Ausführungsbeispiele der Erfindung anhand von sechs schematisch dargestellten Figuren erläutert, ohne jedoch dabei die Erfindung zu beschränken. Dabei zeigt:
Figur 1: eine schematische Seitenansicht einer erfindungsgemäßen Temperaturmesseinrichtung;
Figur 2: eine schematische seitliche Querschnittansicht der erfindungsgemäßen Temperaturmesseinrichtung nach Figur 1 mit einem eingehängten Zugdraht;
Figur 3: eine schematische perspektivische Ansicht der Temperaturmesseinrichtung nach den Figuren 1 und 2;
Figur 4: eine schematische Seitenansicht einer erfindungsgemäßen Temperaturmessvorrichtung aufweisend mehrere Temperaturmesseinrichtungen;
Figur 5: eine schematische Seitenansicht einer entspannten Korbfeder (oben) und einer gespannten Korbfeder (unten) zum Herstellen einer erfindungsgemäßen Temperaturmesseinrichtung; und
Figur 6: eine schematische Teil-Querschnittansicht eines erfindungsgemäßen Röhrenreaktors mit einer darin fixierten erfindungsgemäßen Temperaturmesseinrichtung.

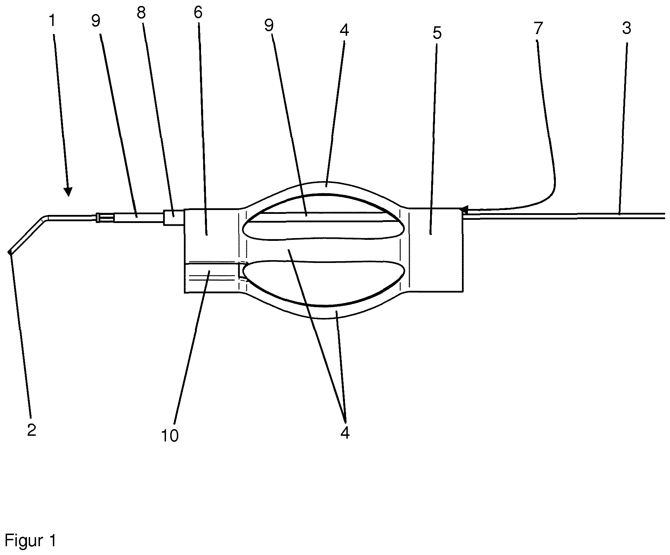

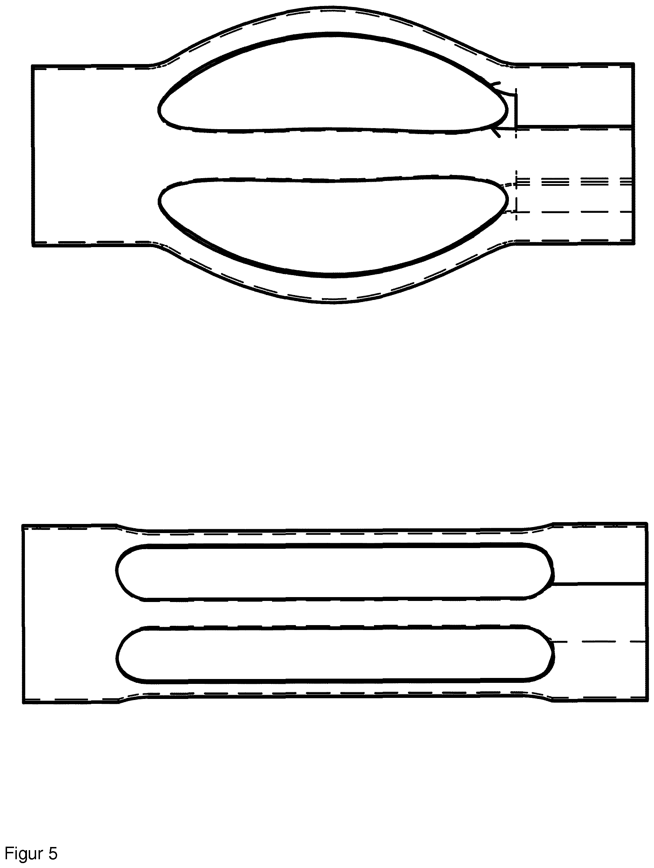

Figur 1 zeigt eine schematische Seitenansicht einer erfindungsgemäßen Temperaturmesseinrichtung. Die Temperaturmesseinrichtung umfasst ein Mantel-Thermoelement 1 als Temperatursensor. Das Thermoelement 1 hat vorne (in Figur 1 links) eine Messspitze 2, an der die Temperatur gemessen wird, und damit verbunden ein Kabel 3, in dem die Leitungen 3 des Thermoelements 1 angeordnet sind. Das Thermoelement 1 ist mit einer elastischen Korbfeder 4 aus Stahl verbunden, die einteilig mit einer hinteren ersten ringförmigen Halterung 5 und einer vorderen zweiten ringförmigen Halterung 6 verbunden beziehungsweise aufgebaut ist. Die Korbfeder 4 ist zwischen der ersten Halterung 5 und der zweiten Halterung 6 angeordnet und durch sechs bauchartig radial nach außen gewölbte elastische Bänder geformt. Man könnte auch sagen, dass die Korbfeder 4 an beiden Enden durch die erste Halterung 5 und die zweite Halterung 6 begrenzt ist und sich die Bänder dazwischen erstrecken, wenn die Halterungen 5, 6 als Teil der Korbfeder verstanden werden sollen. Durch diesen Aufbau kann die Korbfeder 4 entlang ihrer Symmetrieachse beziehungsweise Mittelachse linear federn. Die Korbfeder 4 kann durch Ziehen an den beiden Halterungen 5, 6 gestreckt werden (siehe die Figur 5 unten). Im gestreckten Zustand kann die Korbfeder 4 in ein Rohr eines Röhrenreaktors (nicht gezeigt) eingeschoben werden.

Die Messspitze 2 ist mit einem Winkel von 45° abgewinkelt und in Richtung der Symmetrieachse der Korbfeder 4 ausgerichtet. Bevorzugt ist die Messspitze 2 im gestreckten Zustand der Korbfeder 4 genau auf der Symmetrieachse angeordnet und damit in der Mitte des Rohrs (nicht gezeigt).

Das Thermoelement 1 ist über ein Festlager 7 mit der ersten Halterung 5 fest verbunden, beispielsweise in dem der Mantel des Thermoelements 1 angeschweißt wird, und über ein Gleitlager 8 mit der zweiten Halterung 6 gleitend verbunden. Die gleitende Verbindung wird erzeugt, indem der Mantel des Thermoelements 1 in das Gleitlager 8 (beispielsweise ein Röhrchen 8) eingesteckt ist und in dem Gleitlager 8 in Längsrichtung verschiebbar angeordnet ist.

Das Thermoelement 1 ist im Bereich des Festlagers 7 und des Gleitlagers 8 mit einem Verstärkungsrohr 9 ausgebildet, das das Kabel 3 umschließt. Das Verstärkungsrohr 9 dient dazu, dass das Thermoelement 1 beziehungsweise dessen Kabel 3 gut in dem Gleitlager 8 gleiten kann, ohne dass es sich innerhalb der Korbfeder 4 verformen kann.

In der zweiten Halterung 6, die mit dem Thermoelement 1 gleitend verbunden ist und die vorne (in Figur 1 links) angeordnet ist, sind zwei einander gegenüberliegende Nuten 10 ausgeformt. Die Nuten 10 bilden dadurch halboffene Ösen als Befestigungsmittel für eine Einführhilfe (nicht gezeigt). Da die Nuten 10 an der Innenwand des Rohrs anliegen werden die Ösen im eingesetzten Zustand durch die Innwandung des Rohrs begrenzt.

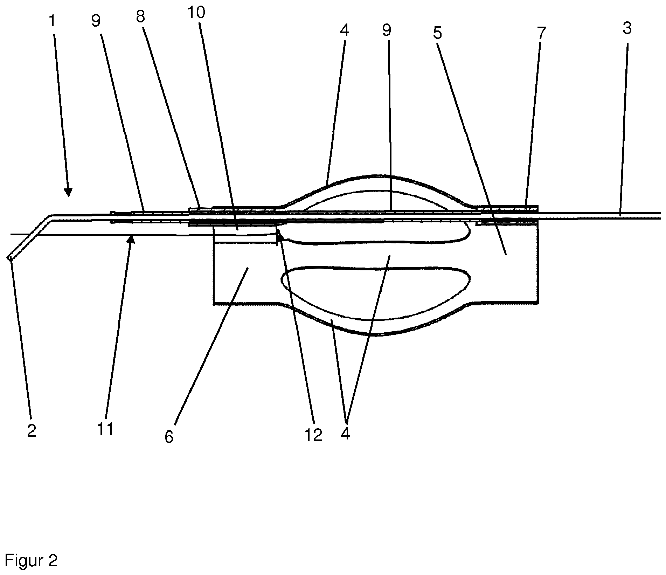

Figur 2 zeigt eine schematische seitliche Querschnittansicht der erfindungsgemäßen Temperaturmesseinrichtung nach Figur 1 mit einem eingehängten Zugdraht 11 als Einführhilfe. Der Zugdraht 11 bildet an dem mit der zweiten Halterung 6 verbundenen Ende einen Haken 12, der in die Nut 10 an der zweiten Halterung 6 greift. Der Zugdraht 11 ist so in eine der durch die Nuten 10 gebildeten Ösen eingehängt. Wenn die Temperaturmesseinrichtung mit Hilfe des Zugdrahts 11 an der Nut 10 und damit an der zweiten Halterung 6 durch ein Rohr (nicht gezeigt) gezogen wird, streckt sich die Korbfeder 4. Dadurch nimmt der Außenumfang der Korbfeder 4 ab. Das Thermoelement 1 blockiert diese Streckung der Korbfeder 4 nicht, da es an der zweiten Halterung 6 in dem Gleitlager 8 gelagert ist. Wenn die Temperaturmesseinrichtung beziehungsweise die Korbfeder 4 die gewünschte Position in dem Rohr erreicht hat, wird der Zugdraht 11 kurz entgegen der Zugrichtung in das Rohr eingeschoben. Dadurch löst sich der Haken 12 des Zugdrahts 11 von der Nut 10 und der Zugdraht 11 ist von der zweiten Halterung 6 gelöst und kann aus dem Rohr herausgezogen werden. Die Korbfeder 4 presst sich an den Innenwänden des Rohrs fest und so ist das Thermoelement 1 beziehungsweise die gesamte Temperaturmesseinrichtung in dem Rohr positioniert und fixiert.

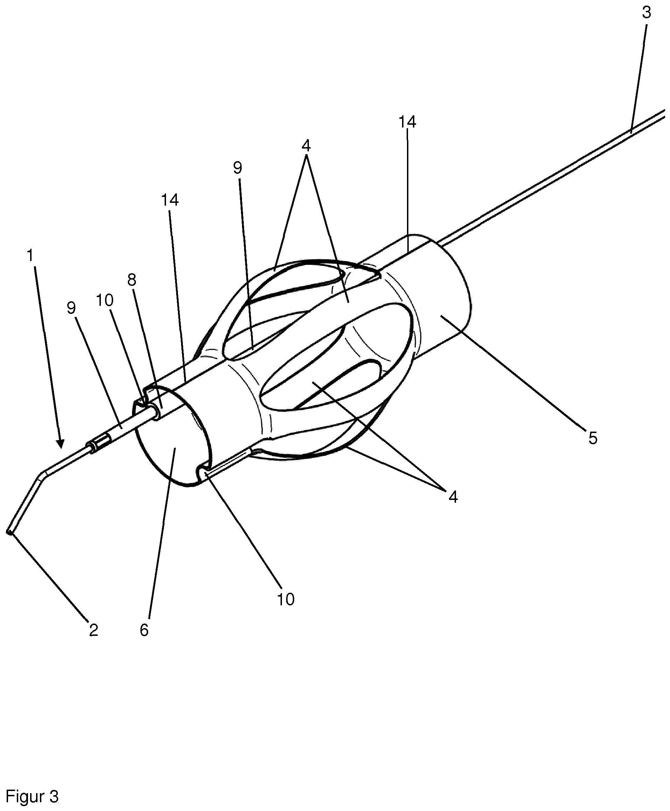

Figur 3 zeigt eine schematische perspektivische Ansicht der Temperaturmesseinrichtung nach den Figuren 1 und 2. Auf der Oberseite der Halterungen 5, 6 sind Schweißnähte 14 zu erkennen, an denen die Halterungen 5, 6 als zwei Ringe oder Rohre zusammengefügt wurden. Die Halterungen 5, 6 werden zusammen mit den Bändern beziehungsweise Stegen der Korbfeder 4 einteilig aus einem Blech geschnitten oder gestanzt, gerollt und an den Schweißnähten 14 in rohrförmig aneinander geschweißt. Das Gleitlager 8 wird an der Schweißnaht 14 der zweiten Halterung 6 und das Festlager 7 wird an der Schweißnaht 14 der ersten Halterung 5 angeschweißt, so dass die Position des Festlagers 7 und des Gleitlagers 8 durch die Schweißnähte vorgegeben ist. Das Verstärkungsrohr 9 des Thermoelements 1 wird an das Festlager 7 geschweißt und in das Gleitlager 8 lose eingesteckt.

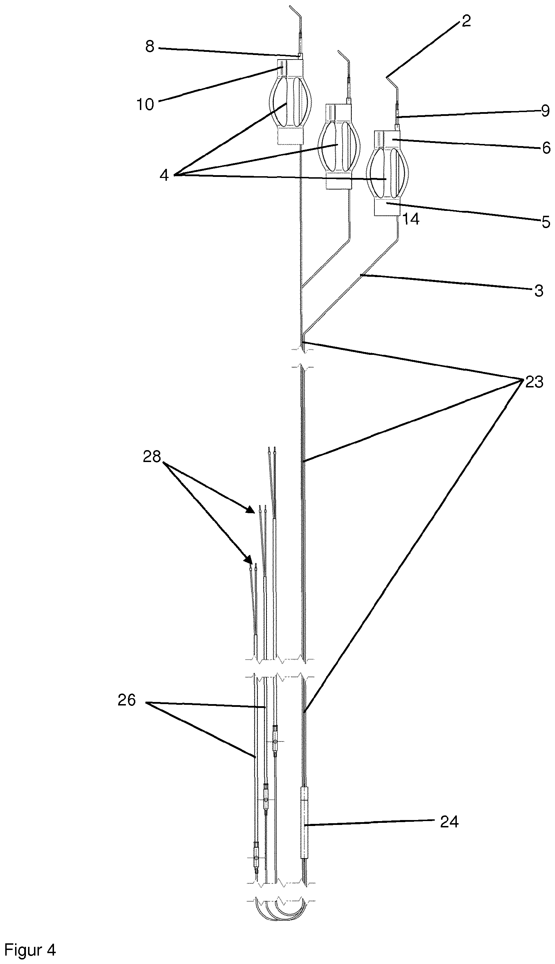

Figur 4 zeigt eine schematische Seitenansicht einer erfindungsgemäßen Temperaturmessvorrichtung aufweisend mehrere Temperaturmesseinrichtungen. Im Prinzip ist jede der Temperaturmesseinrichtungen wie die in den Figuren 1 bis 3 gezeigte Temperaturmesseinrichtung aufgebaut, wobei die Kabel 3 an dem dem vorderen Ende (in Figur 4 oben) mit den Messspitzen 2 gegenüberliegenden Ende zu einem gemeinsamen Kabel 23 verbunden sind, das alle Leitungen 3 der verschiedenen Thermoelemente 1 enthält. Die Korbfedern 4 mit den daran befestigten Thermoelementen 1 können einzeln in verschiedene Rohre eines Rohrbündelreaktors (nicht gezeigt) eingeführt werden und/oder hintereinander in verschiedene Tiefen eines Rohrs einer Röhrenreaktors (nicht gezeigt) eingeführt werden. Es versteht sich von selbst, dass sich diese Ausführung ohne weiteres auf mehr als drei Korbfedern 4 und Temperatursensoren 1 ausdehnen lässt.

Das gemeinsame Kabel 23 kann über eine gasdichte Durchführung 24 aus dem Röhrenreaktor (nicht gezeigt) heraus geführt werden. Die gasdichte Durchführung 24 kann mit einem Vakuum-verlöteten Mantelkabel realisiert werden. Hinter der Durchführung 24 teilt sich das gemeinsame Kabel 23 wieder auf und ist über Anschlüsse mit Thermoleitungen 26 oder Ausgleichsleitungen 26 verbunden. Die Thermoleitungen 26 oder Ausgleichsleitungen 26 münden in Anschlüssen 28 zur Verbindung der Thermoelemente 1 mit Messgeräten zum Auswerten der Thermospannung.

Figur 5 zeigt eine schematische Seitenansicht einer entspannten Korbfeder (oben) und einer gespannten Korbfeder (unten) zum Herstellen einer erfindungsgemäßen Temperaturmesseinrichtung. An den beiden Abbildungen ist deutlich zu erkennen, wie der Außenumfang der Korbfeder durch die Streckung abnimmt. Wenn die Korbfeder im gestreckten Zustand in ein Rohr (nicht gezeigt) eingeführt wird und dann entspannt wird, werden sich die elastischen Bänder in der Mitte wieder radial nach außen wölben, um in ihren gewölbten Ursprungszustand zurückzukehren und bei ausreichend geringem, das heißt passendem Innendurchmesser des Rohrs an die Innenwände des Rohrs anlegen. Dadurch presst sich die Korbfeder an die Innenwände des Rohrs und wird dadurch fixiert. Das gleiche wird mit den Temperatormesseinrichtungen nach den Figuren 1 bis 4 gemacht, um diese mit Hilfe der Korbfedern 4 in einem Rohr zu fixieren.

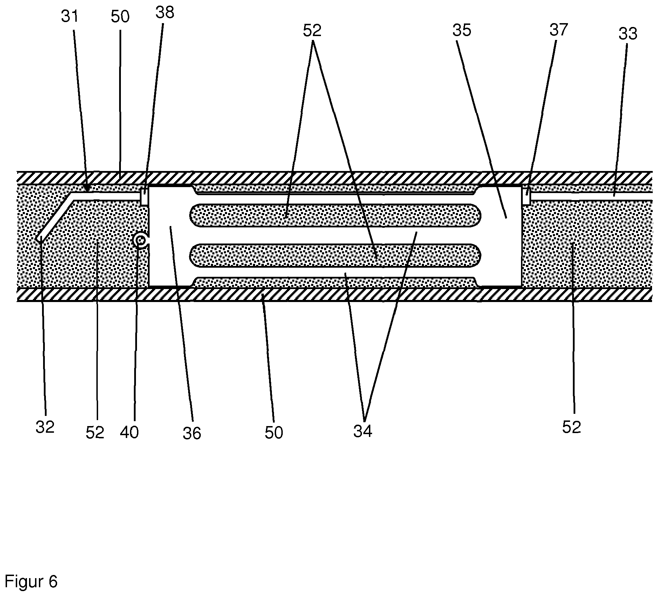

Figur 6 zeigt eine schematische Teil-Querschnittansicht eines erfindungsgemäßen Röhrenreaktors mit einer darin fixierten erfindungsgemäßen Temperaturmesseinrichtung. Die Temperaturmesseinrichtung ist dabei in einer Seitenansicht gezeigt und ein Teil des Röhrenreaktors in einer Querschnittansicht. Ebenso beziehungsweise alternativ könnte eine Temperaturmesseinrichtung nach den Figuren 1 bis 3 eingesetzt sein.

Die Temperaturmesseinrichtung umfasst ein Thermoelement 31 als Temperatursensor. Alternativ könnte auch ein Temperaturmesswiderstand als Temperatursensor verwendet werden. Das Thermoelement 31 hat vorne (in Figur 6 links) eine Messspitze 32, an der die Temperatur gemessen wird und ein Kabel 33, in dem die Leitungen 33 des Thermoelements 1 angeordnet sind. Das Thermoelement 31 ist mit einer Korbfeder 34 aus Federstahl oder aus einem anderen geeigneten elastischen Material verbunden, die einteilig mit einer hinteren ersten ringförmigen Halterung 35 und einer vorderen zweiten ringförmigen Halterung 36 verbunden ist. Die Korbfeder 34 ist zwischen der ersten Halterung 35 und der zweiten Halterung 36 angeordnet und durch vier elastische Bänder geformt (von denen in Figur 6 nur zwei zu erkennen sind), wobei die Bänder sich im entspannten Zustand bauchartig radial nach außen wölben würden (analog der Figuren 1 bis 5). Die in Figur 6 gezeigte Korbfeder 34 ist also elastisch verformt und unter Spannung.

Die Korbfeder 34 kann also entlang ihrer Symmetrieachse beziehungsweise entlang Mittelachse linear federn. Die Korbfeder 34 ist zwischen den beiden Halterungen 35, 36 gestreckt.

Das Thermoelement 31 ist über ein Festlager 37 mit der ersten Halterung 35 fest verbunden und über ein Gleitlager 38 mit der zweiten Halterung 36 gleitend verbunden. Die gleitende Verbindung wird erzeugt, indem der Mantel des Thermoelements 31 in das Gleitlager 38 (beispielsweise ein Röhrchen 38) eingesteckt ist und in dem Gleitlager 38 in Längsrichtung verschiebbar angeordnet ist. Das Thermoelement 31 kann im Bereich des Festlagers 37 und des Gleitlagers 38 mit einem zusätzlichen Verstärkungsrohr ausgebildet sein (nicht gezeigt), das das Kabel 33 umschließt.

An der zweiten Halterung 36, die mit dem Thermoelement 31 gleitend verbunden ist und die vorne (in Figur 6 links) angeordnet ist, ist eine Öse 40 ausgeformt. Die Öse 40 dient als Befestigungsmittel für eine Einführhilfe (nicht gezeigt). Aufgrund der Öse 40 kann auf eine Nut wie nach dem Ausführungsbeispiel zu den Figuren 1 bis 3 verzichtet werden. Die Temperaturmesseinrichtung ist in einem Rohr 50 eines Röhrenreaktors oder eines Rohrbündelreaktors angeordnet. Das Rohr 50 ist in einer schematischen Querschnittansicht dargestellt und die Wände des Rohrs 50 sind schraffiert dargestellt. In dem Rohr 50 ist ein Katalysatorgranulat 52 enthalten (in Figur 6 durch Punkte dargestellt), das die Messspitze 32 des Temperatursensors 31 einhüllt und die Korbfeder 34 durchdringt. Das Rohr 50 mit dem Katalysatorgranulat 52 setzt sich in beide Richtungen (in Figur 6 nach links und rechts) fort.

Die Messspitze 32 ist mit einem Winkel von 45° abgewinkelt und in Richtung der Symmetrieachse der Korbfeder 34 ausgerichtet. Bevorzugt ist die Messspitze 32 im gestreckten Zustand der Korbfeder 34 genau auf der Symmetrieachse angeordnet und damit in der Mitte des Rohrs 50.

Um eine solche Temperaturmesseinrichtung in einem Rohr 50 eines Röhrenreaktors oder Rohrbündelreaktors auszuwechseln, wird zunächst das Katalysatorgranulat 52 aus dem Rohr 50 ausgeschüttet. Dabei rieselt das Katalysatorgranulat 52 durch die Korbfeder 34 hindurch. Nachdem das Katalysatorgranulat 52 aus dem Rohr 50 entfernt wurde, kann die vorhandene (defekte beziehungsweise auszutauschende) Temperaturmesseinrichtung an dem Kabel 33 aus dem Rohr 50 nach hinten (in Figur 6 rechts) herausgezogen werden. Da der Temperatursensor 1 und damit das Kabel 33 nur an der hinteren, ersten Halterung 35 über das Festlager 37 fest verbunden ist, wird die Korbfeder 34 durch Ziehen an der ersten Halterung 35 gestreckt und kann bequem aus dem Rohr 50 herausgezogen werden.

Eine neue baugleiche Temperaturmesseinrichtung wird danach in das Rohr 50 eingeführt, in dem eine Einführhilfe in Form eines Zugdrahts (nicht gezeigt) oder eines Schubstabs (nicht gezeigt) mit einem Haken am Ende in die Öse 40 greift und die Temperaturmesseinrichtung in das Rohr 50 eingezogen oder eingeschoben wird. Da die Kraft hierbei auf die Öse 40 und damit auf die zweite Halterung 36 wirkt, wird die Korbfeder 34 gestreckt und kann leicht und ohne im Rohr 50 zu blockieren in das Rohr eingeführt werden. Wenn die Temperaturmesseinrichtung die gewünschte Position erreicht hat, wird der Haken des Zugdrahts oder des Schubstabs aus der Öse 40 gelöst und die Korbfeder 34 dehnt sich mit ihren elastischen Bändern radial aus, so dass diese an die Innenwände des Rohrs 50 gepresst werden. Dadurch wird die Temperaturmesseinrichtung in dem Rohr 50 fixiert.

Anschließend kann neues Katalysatorgranulat 52 in den Röhrenreaktor eingefüllt werden. Dabei rieselt das Katalysatorgranulat 52 durch die Korbfeder 34 hindurch. Da durch den gezeigten Aufbau die Temperaturmesseinrichtung im Wesentlichen hohl ist und nur wenige Vorsprünge bildet, an denen sich die Körner des Katalysatorgranulats 52 verfangen können, bietet die Temperaturmesseinrichtung den einströmendem Katalysatorgranulat 52 nur sehr wenig Strömungswiderstand und die Gefahr eines Staus oder einer Verstopfung im Bereich der Temperaturmesseinrichtung ist sehr gering oder ausgeschlossen. Gleichzeitig ist die Messspitze 32 des Thermoelements 31 durch den Aufbau zuverlässig in der Mitte des Rohrs 52 platziert. Dazu weist das Thermoelement 31 einen starren Mantel auf, mit dem die Position relativ zum Festlager 37 festgelegt ist und der eine Torsion um den Mantel weitgehend ausschließt. Zur Vermeidung von Torsionen kann auch vorgesehen sein, dass das Gleitlager 38 eine nicht rotationssymmetrische Lagerung aufweist, beispielsweise einen rechteckigen Querschnitt.

Alternativ zu dem Katalysatorgranulat 52 kann auch ein Katalysatorpulver oder ein Gemisch aus einem Pulver und einem Granulat als Katalysator verwendet werden.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Thermoelement
- 2: Messspitze
- 3: Kabel / Leitungen
- 4: Korbfeder
- 5: Erste Halterung / Hintere Halterung
- 6: Zweite Halterung / Vordere Halterung
- 7: Festlager
- 8: Gleitlager
- 9: Verstärkungsrohr
- 10: Nut
- 11: Zugdraht
- 12: Haken
- 14: Schweißnaht
- 23: Gemeinsame Leitung
- 24: Gasdichte Durchführung
- 26: Thermoleitung / Ausgleichsleitung
- 28: Anschluss
- 31: Thermoelement
- 32: Messspitze
- 33: Kabel / Leitungen
- 34: Korbfeder
- 35: Erste Halterung / Hintere Halterung
- 36: Zweite Halterung / Vordere Halterung
- 37: Festlager
- 38: Gleitlager
- 40: Öse
- 50: Rohr
- 52: Katalysatorgranulat

## Patentansprüche

1. Temperaturmesseinrichtung zur Temperaturerfassung in einem Rohr (50) eines Röhrenreaktors, wobei die Temperaturmesseinrichtung einen Temperatursensor (1, 31) und eine Korbfeder (4, 34) aufweist, wobei der Temperatursensor (1, 31) zumindest eine Temperaturmessstelle (2, 32) und zumindest zwei Leitungen (3, 33) zur elektrischen Kontaktierung der zumindest einen Temperaturmessstelle (2, 32) aufweist, wobei an der Korbfeder (4, 34) eine erste Halterung (5, 35) für den Temperatursensor (1, 31) befestigt ist, wobei der Temperatursensor (1, 31) mit der ersten Halterung (5, 35) fest verbunden ist.

2. Temperaturmesseinrichtung nach Anspruch 1, **dadurch gekennzeichnet, dass** die Temperaturmessstelle (2, 32) zentrisch bezogen auf eine Mittelachse der gestreckten Korbfeder (4, 34) angeordnet ist und/oder die Temperaturmessstelle (2, 32) zentrisch bezogen auf die Zylinderachse eines zumindest bereichsweise zylindrischen Rohrs (50) des Röhrenreaktors angeordnet ist, in das die Temperaturmesseinrichtung einzusetzen ist oder eingesetzt ist.

3. Temperaturmesseinrichtung nach Anspruch 1 oder 2, **dadurch gekennzeichnet, dass**
sich die Temperaturmessstelle (2, 32) an einem Ende des Temperatursensors (1, 31) befindet und sich der Temperatursensor (1, 31) von der ersten Halterung (5, 35) am äußeren Umfang der Temperaturmesseinrichtung in Richtung einer Mittelachse der Korbfeder (4, 34) erstreckt, so dass die Temperaturmessstelle im Bereich der Federachse der Korbfeder (4, 34) positioniert ist.

4. Temperaturmesseinrichtung nach einem der vorgehenden Ansprüche, **dadurch gekennzeichnet, dass**
die erste Halterung (5, 35) ringförmig ist, insbesondere rohrförmig ist.

5. Temperaturmesseinrichtung nach einem der vorgehenden Ansprüche, **dadurch gekennzeichnet, dass**
die vollständig gestreckte Korbfeder (4, 34) einen Außendurchmesser aufweist, der um maximal 1 mm kleiner ist als der Innendurchmesser des Rohrs (50) des Röhrenreaktors, bevorzugt um maximal 0,4 mm kleiner ist als der Innendurchmesser des Rohrs (50) des Röhrenreaktors.

6. Temperaturmesseinrichtung nach einem der vorgehenden Ansprüche, **dadurch gekennzeichnet, dass**
an der Korbfeder (4, 34) eine zweite Halterung (6, 36) befestigt ist, wobei die Korbfeder (4, 34) zwischen der ersten Halterung (5, 35) und der zweiten Halterung (6, 36) angeordnet ist, so dass die Halterungen (5, 6, 35, 36) über die Korbfeder (4, 34) miteinander verbunden sind, wobei der Temperatursensor (1, 31) mit der zweiten Halterung (6, 36) gleitend verbunden ist.

7. Temperaturmesseinrichtung nach Anspruch 6, **dadurch gekennzeichnet, dass** die zweite Halterung (6, 36) ringförmig ist, insbesondere rohrförmig ist, wobei bevorzugt an einer zweiten Halterung (6, 36) zumindest ein Befestigungsmittel (10, 40) vorgesehen ist, die sich parallel zu der linearen Federachse der Korbfeder (4, 34) erstreckt, besonders bevorzugt zwei Längsnuten (10) vorgesehen sind, die sich parallel zu der linearen Federachse der Korbfeder (4, 34) erstrecken.

8. Temperaturmesseinrichtung nach einem der vorgehenden Ansprüche, **dadurch gekennzeichnet, dass**
eine Sicherungseinrichtung vorgesehen ist, mit der die Korbfeder (4, 34) in einem gestreckten Zustand gespannt zu halten ist, um die Korbfeder (4, 34) gleitend in einem Rohr (50) des Röhrenreaktors positionieren zu können, wobei bevorzugt die Sicherungseinrichtung in das zumindest eine Befestigungsmittel (10, 40) einer zweiten Halterung (5, 35) greift.

9. Temperaturmesseinrichtung nach einem der vorangehenden Ansprüche, **dadurch gekennzeichnet, dass**
die Temperaturmesseinrichtung eine Einführhilfe (11) aufweist, die an der Korbfeder (4, 34) und/oder der zweiten Halterung (6, 36) lösbar befestigt ist oder zu befestigen ist, so dass ohne Krafteinwirkung auf die Einführhilfe (11) oder nach Lösen der Einführhilfe (11) die Korbfeder (4, 34) entspannt und die Korbfeder (4, 34) sich radial ausdehnt und/oder sich an die Innenwand des Rohrs (50) anpresst und dabei den Temperatursensor (1, 31) in dem Rohr (50) positioniert, insbesondere zentriert, wobei bevorzugt die Einführhilfe (11) ein Zugdraht (11) mit zumindest einem Haken (12) zum Befestigen in einem Befestigungsmittel (10, 40) an der ersten Halterung (5, 35), einer zweiten Halterung (6, 36) und/oder an der Korbfeder (4, 34) ist.

10. Temperaturmesseinrichtung nach einem der vorgehenden Ansprüche, **dadurch gekennzeichnet, dass**
der Temperatursensor (1, 31) ein Thermoelement (1, 31) ist, insbesondere ein Mantel-Thermoelement (1, 31), und die Leitungen (3, 33) Thermodrähte (26) und/oder Temperaturausgleichsdrähte aufweisen.

11. Temperaturmesseinrichtung nach einem der vorgehenden Ansprüche, **dadurch gekennzeichnet, dass**
ein Verstärkungsrohr (9) mit den Leitungen (3, 33) des Temperatursensors (1, 31) verbunden ist, insbesondere versickt ist, wobei das Verstärkungsrohr (9) mit der ersten Halterung (5, 35) fest verbunden ist und wobei vorzugsweise das Verstärkungsrohr (9) in einem Gleitlager (8) der zweiten Halterung (6, 36) gleitend gelagert ist.

12. Temperaturmessvorrichtung aufweisend mehrere Temperaturmesseinrichtungen nach einem der vorangehenden Ansprüche, **dadurch gekennzeichnet, dass**
die Temperaturmessvorrichtung zumindest zwei Temperatursensoren (1, 31) und zumindest zwei Korbfedern (4, 34) aufweist, wobei jeder Temperatursensor (1, 31) mit je einer Korbfeder (4, 34) verbunden ist.

13. Röhrenreaktor, insbesondere Rohrbündelreaktor, aufweisend wenigstens ein Rohr (50) und zumindest eine Temperaturmesseinrichtung nach einem der Ansprüche 1 bis 11 oder eine Temperaturmessvorrichtung nach Anspruch 12, wobei die zumindest eine Temperaturmesseinrichtung in dem wenigstens einen Rohr (50) angeordnet ist, wobei vorzugsweise ein Katalysator (52) in dem wenigstens einen Rohr (50) enthalten ist, so dass die Temperaturmessstelle (2, 32) von dem Katalysator (52) umgeben ist oder die Temperaturmessstellen (2, 32) von dem Katalysator (52) umgeben sind.

14. Verfahren zum Einsetzen einer Temperaturmesseinrichtung, **gekennzeichnet durch** die chronologischen Schritte:
Befestigen eines Temperatursensors (1, 31) an einer ersten Halterung (5, 35), wobei die erste Halterung (5, 35) an einer Korbfeder (4, 34) befestigt ist;
Einführen der gespannten und gestreckten Korbfeder (4, 34) mit dem Temperatursensor (1, 31) in ein Rohr (50);
Positionieren der Korbfeder (4, 34) in dem Rohr (50); und
Fixieren der Korbfeder (4, 34) in dem Rohr (50), wobei sich die Korbfeder (4, 34) radial ausdehnt und/oder an die Innenwand des Rohrs (50) anpresst und dadurch die Korbfeder (4, 34) und damit der Temperatursensor (1, 31) in dem Rohr (50) fixiert werden.

15. Verfahren nach Anspruch 14, **dadurch gekennzeichnet, dass** eine Temperasturmesseinrichtung nach einem der Ansprüche 1 bis 11 eingesetzt wird.

16. Verfahren nach Anspruch 14 oder 15, **dadurch gekennzeichnet, dass**
die Korbfeder (4, 34) mit einer Sicherungseinrichtung oder einer Einführhilfe (11) gespannt wird und die Korbfeder (4, 34) durch Lösen der Sicherungseinrichtung oder der Einführhilfe (11) von der Korbfeder (4, 34) und/oder einer zweiten Halterung (6, 36) entspannt wird, wobei die zweite Halterung (6, 36) an der der ersten Halterung (5, 35) gegenüberliegenden Seite der Korbfeder (4, 34) befestigt ist und/oder dass
ein Katalysator (52), insbesondere ein Katalysatorgranulat (52) und/oder ein Katalysatorpulver, in das Rohr (50) gefüllt wird, nachdem die Korbfeder (4, 34) und der Temperatursensor (1, 31) durch Entspannen der Korbfeder (4, 34) in dem Rohr (50) fixiert worden sind.

## Claims

1. Temperature measuring device for temperature measurement in a tube (50) of a tube reactor, the temperature measuring device having a temperature sensor (1, 31) and a basket spring (4, 34), the temperature sensor (1, 31) having at least one temperature measuring point (2, 32) and at least two lines (3, 33) for electrical contacting the at least one temperature measuring point (2, 32), a first holder (5, 35) for the temperature sensor (1, 31) being fastened to the basket spring (4, 34), wherein the temperature sensor (1, 31) being fixedly connected to the first holder (5, 35).

2. Temperature measuring device according to claim 1, **characterized in that** the temperature measuring point (2, 32) is arranged centrally with respect to a central axis of the stretched basket spring (4, 34) and/or the temperature measuring point (2, 32) is arranged centrally with respect to the cylinder axis of an at least regionally cylindrical tube (50) of the tubular reactor into which the temperature measuring device is inserted or is to be inserted.

3. Temperature measuring device according to claim 1 or 2, **characterized in that** the temperature measuring point (2, 32) is located at one end of the temperature sensor (1, 31) and the temperature sensor (1, 31) extends from the first holder (5, 35) on the outer circumference of the temperature measuring device in the direction of a central axis of the basket spring (4, 34) so that the temperature measuring point is positioned in the region of the spring axis of the basket spring (4, 34).

4. Temperature measuring device according to any one of the preceding claims, **characterized in that**
the first holder (5, 35) is annular, in particular tubular.

5. Temperature measuring device according to any one of the preceding claims, **characterized in that**
the completely stretched basket spring (4, 34) has an outer diameter which is smaller by a maximum of 1 mm compared to the inner diameter of the tube (50) of the tubular reactor, preferably smaller by a maximum of 0.4 mm than the inner diameter of the tube (50) of the tubular reactor.

6. Temperature measuring device according to any one of the preceding claims, **characterized in that**
a second holder (6, 36) is fastened to the basket spring (4, 34), the basket spring (4, 34) being arranged between the first holder (5, 35) and the second holder (6, 36) so that the holders (5, 6, 35, 36) are connected to one another via the basket spring (4, 34), the temperature sensor (1, 31) being slidably connected to the second holder (6, 36).

7. Temperature measuring device according to claim 6, **characterized in that** the second holder (6, 36) is annular, in particular tubular, wherein preferably at least one fastening means (10, 40) is provided on a second holder (6, 36) and extending parallel to the linear spring axis of the basket spring (4, 34), particular preferably two longitudinal grooves (10) being provided and extending parallel to the linear spring axis of the basket spring (4, 34).

8. Temperature measuring device according to any one of the preceding claims, **characterized in that**
a securing device is provided with which the basket spring (4, 34) is to be held tensioned in an extended state in order to be able to position the basket spring (4, 34) slidably in a tube (50) of the tubular reactor, the securing device preferably engaging in the at least one fastening means (10, 40) of a second holder (6, 36).

9. Temperature measuring device according to any one of the preceding claims, **characterized in that**
the temperature measuring device has an insertion aid (11) which is releasably fastened or is to be releasably fastened to the basket spring (4, 34) and/or the second holder (6, 36), so that the basket spring (4, 34) is relaxed and the basket spring (4, 34) expands radially and/or presses against the inner wall of the tube (50) without the application of force on the insertion aid (11) or after the insertion aid (11) has been released, and thereby positions the temperature sensor (1, 31) in the tube (50), in particular centers it, the insertion aid (11) preferably being a taut wire (11) with at least one hook (12) for fastening in a fastening means (10, 40) to the first holder (5, 35), a second holder (6, 36) and/or to the basket spring (4, 34).

10. Temperature measuring device according to any one of the preceding claims, **characterized in that**
the temperature sensor (1, 31) is a thermocouple (1, 31), in particular a sheathed thermocouple (1, 31), and the leads (3, 33) have thermowires (26) and/or temperature compensation wires.

11. Temperature measuring device according to any one of the preceding claims, **characterized in that**
a reinforcing tube (9) is connected to the lines (3, 33) of the temperature sensor (1, 31), in particular is beaded, the reinforcing tube (9) being firmly connected to the first holder (5, 35) and preferably the reinforcing tube (9) being mounted in a sliding bearing (8) of the second holder (6, 36) so as to slide.

12. Temperature measuring device having a plurality of temperature measuring devices according to any one of the preceding claims, **characterized in that** the temperature measuring device has at least two temperature sensors (1, 31) and at least two basket springs (4, 34), each temperature sensor (1, 31) being connected to a respective basket spring (4, 34).

13. Tube reactor, in particular tube bundle reactor, having at least one tube (50) and at least one temperature measuring device according to any one of claims 1 to 11 or a temperature measuring device according to claim 12, the at least one temperature measuring device being arranged in the at least one tube (50), preferably a catalyst (52) being contained in the at least one tube (50), so that the temperature measuring point (2, 32) is surrounded by the catalyst (52) or the temperature measuring points (2, 32) are surrounded by the catalyst (52).

14. Method for inserting a temperature measuring device, **characterized by** the chronological steps:
attaching a temperature sensor (1, 31) to a first holder (5, 35), the first holder (5, 35) being attached to a basket spring (4, 34);
inserting the tensioned and stretched basket spring (4, 34) with the temperature sensor (1, 31) into a tube (50);
positioning said basket spring (4, 34) in said tube (50); and
fixing the basket spring (4, 34) in the tube (50), wherein the basket spring (4, 34) expands radially and/or presses against the inner wall of the tube (50) and thereby the basket spring (4, 34) and thus the temperature sensor (1, 31) are fixed in the tube (50).

15. Method according to claim 14, **characterized in that** a temperature measuring device according to any one of claims 1 to 11 is used.

16. Method according to claim 14 or 15, **characterized in that**
the basket spring (4, 34) is tensioned with a securing device or an insertion aid (11) and the basket spring (4, 34) is released by releasing the securing device or the insertion aid (11) from the basket spring (4, 34) and/or a second holder (6, 36), the second holder (6, 36) being fastened to the side of the basket spring (4, 34) opposite the first holder (5, 35) and/or **in that**
a catalyst (52), in particular a catalyst granulate (52) and/or a catalyst powder, is filled into the tube (50) after the basket spring (4, 34) and the temperature sensor (1, 31) have been fixed in the tube (50) by relaxing the basket spring (4, 34).

## Revendications

1. Système de mesure de la température destiné à la détection de la température dans un tube (50) d'un réacteur tubulaire, où le système de mesure de la température présente un capteur de température (1, 31) et un ressort à barillet (4, 34), où le capteur de température (1, 31) présente au moins un point de mesure de la température (2, 32) et au moins deux lignes (3, 33) pour la mise en contact électrique de l'au moins un point de mesure de la température (2, 32), où un premier élément de retenue (5, 35) pour le capteur de température est fixé au ressort à barillet (4, 34), où le capteur de température (1, 31) est solidement relié avec le premier élément de retenue (5, 35).

2. Système de mesure de la température selon la revendication 1, **caractérisé en ce que**
le point de mesure de la température (2, 32) est disposé de manière centrale par rapport à un axe médian du ressort à barillet (4, 34) étiré et/ou le point de mesure de la température (2, 32) est disposé de manière centrale par rapport à l'axe de cylindre d'au moins un tube (50) cylindrique par endroits du réacteur tubulaire, dans lequel le système de mesure de température est à insérer ou est inséré.

3. Système de mesure de la température selon la revendication 1 ou la revendication 2, **caractérisé en ce que**
le point de mesure de la température (2, 32) se situe à une extrémité du capteur de température (1, 31) et le capteur de température (1, 31) s'étend à partir du premier élément de retenue (5, 35) sur le pourtour extérieur du système de mesure de la température en direction d'un axe médian du ressort à barillet (4, 34), de sorte que le point de mesure de la température est positionné dans la région de l'axe de ressort du ressort à barillet (4, 34).

4. Système de mesure de la température selon l'une des revendications précédentes, **caractérisé en ce que**
le premier élément de retenue (5, 35) est en forme d'anneau, notamment en forme de tube.

5. Système de mesure de la température selon l'une des revendications précédentes, **caractérisé en ce que**
le ressort à barillet (4, 34) totalement étiré présente un diamètre extérieur qui est au maximum plus petit d'1 mm que le diamètre intérieur du tube (50) du réacteur tubulaire, de préférence, est au maximum plus petit de 0,4 mm que le diamètre intérieur du tube (50) du réacteur tubulaire.

6. Système de mesure de la température selon l'une des revendications précédentes, **caractérisé en ce**
**qu'**un second élément de retenue (6, 36) est fixé sur le ressort à barillet (4, 34), où le ressort à barillet (4, 34) est disposé entre le premier élément de retenue (5, 35) et le second élément de retenue (6, 36) de sorte que les éléments de retenue (5, 6, 35, 36) sont reliés ensemble par le biais du ressort à barillet (4, 34), où le capteur de température (1, 31) est relié avec le second élément de retenue (6, 36) de manière coulissante.

7. Système de mesure de la température selon la revendication 6, **caractérisé en ce que**
le second élément de retenue (6, 36) est de forme annulaire, notamment en forme de tube, où de préférence au moins un système de fixation (10, 40) est prévu sur un second élément de retenue (6, 36) qui s'étend parallèlement par rapport à l'axe de ressort linéaire du ressort à barillet (4, 34), de manière particulièrement préférée, deux rainures longitudinales (10) sont prévues qui s'étendent parallèlement par rapport à l'axe de ressort linéaire du ressort à barillet (4, 34).

8. Système de mesure de la température selon l'une des revendications précédentes, **caractérisé en ce**
**qu'**un dispositif de sécurité est prévu avec lequel le ressort à barillet (4, 34) peut être maintenu à l'état étiré afin de pouvoir positionner le ressort à barillet (4, 34) de manière coulissante dans un tube (50) du réacteur tubulaire, où, de préférence, le dispositif de sécurité se met en prise dans au moins un système de fixation (10, 40) d'un second élément de retenue (5, 35).

9. Système de mesure de la température selon l'une des revendications précédentes, **caractérisé en ce que**
le système de mesure de la température présente un système d'aide à l'insertion (11) qui est fixé ou est à fixer de manière amovible sur le ressort à barillet (4, 34) et/ou sur le second élément de retenue (6, 36) de sorte que le ressort à barillet (4, 34) est détendu sans l'effet d'une force sur le système d'aide à l'insertion (11) ou après le détachement du système d'aide à l'insertion (11), et le ressort à barillet (4, 34) se détend radialement et/ou se presse contre la paroi intérieure du tube (50) et ce faisant, positionne le capteur de température (1, 31) dans le tube (50), notamment, au centre, où, de préférence, le système d'aide à l'insertion (11) est de préférence un fil de traction (11) avec au moins un crochet (12) pour la fixation dans un système de fixation (10, 40) au niveau du premier élément de retenue (5, 35), d'un second élément de retenue (6, 36) et/ou au niveau du ressort à barillet (4, 34).

10. Système de mesure de température selon l'une des revendications précédentes, **caractérisé en ce que**
le capteur de température (1, 31) est un thermo-élément (1, 31), notamment un thermo-élément en manchon (1, 31), et les lignes (3, 33) présentent des fils thermiques (26) et/ou des fils de compensation de la température.

11. Système de mesure de température selon l'une des revendications précédentes, **caractérisé en ce**
**qu'**un tube de renforcement (9) est relié, est notamment serti, avec les lignes (3, 33) du capteur de température (1, 31), où le tube de renforcement (9) est relié solidement avec le premier élément de retenue (5, 35) et où, de préférence, le tube de renforcement (9) est logé en pouvant coulisser dans un palier lisse (8) du second élément de retenue (6, 36).

12. Dispositif de mesure de la température présentant plusieurs systèmes de mesure de la température selon l'une des revendications précédentes, **caractérisé en ce que**
le dispositif de mesure de la température présente au moins deux capteurs de température (1, 31) et au moins deux ressorts à barillet (4, 34), où chaque capteur de température (1, 31) est relié avec chaque fois un ressort à barillet (4, 34).

13. Réacteur tubulaire, notamment réacteur à faisceau de tubes, présentant au moins un tube (50) et au moins un système de mesure de la température selon l'une des revendications 1 à 11 ou un dispositif de mesure de la température selon la revendication 12, où l'au moins un système de mesure de la température est disposé dans l'au moins un tube (50), où, de préférence, un catalyseur (52) est contenu dans l'au moins un tube (50) de sorte que le point de mesure de la température (2, 32) est entouré par le catalyseur (52), ou les points de mesure de la température (2, 32) sont entourés par le catalyseur (52).

14. Procédé permettant d'insérer un système de mesure de la température, **caractérisé par** les étapes chronologiques :
de fixation d'un capteur de température (1, 31) sur un premier élément de maintien (5, 35), où le premier élément de retenue (5, 35) est fixé sur un ressort à barillet (4, 34) ;
d'insertion du ressort à barillet (4, 34) contraint et étiré avec le capteur de température (1, 31) dans un tube (50) ;
de positionnement du ressort à barillet (4, 34) dans le tube (50) ; et
de fixation du ressort à barillet (4, 34) dans le tube (50), où le ressort à barillet (4, 34) se détend radialement et/ou se presse contre la paroi intérieure du tube (50) et, ainsi, le ressort à barillet (4, 34), et avec lui, le capteur de température (1, 31) se trouvent fixés dans le tube (50).

15. Procédé selon la revendication 14, **caractérisé en ce qu'**un système de mesure de la température selon l'une des revendications 1 à 11 est employé.

16. Procédé selon la revendication 14 ou la revendication 15, **caractérisé en ce que** le ressort à barillet (4, 34) est contraint avec un dispositif de sécurité ou un système d'aide à l'insertion (11) et le ressort à barillet (4, 34) est détendu par la libération du dispositif de sécurité ou du système d'aide à l'insertion (11) par le ressort à barillet (4, 34) et/ou un second élément de maintien (6, 36), où le second élément de maintien (6, 36) est fixé sur le côté du ressort à barillet (4, 34) situé en face du premier élément de retenue (5, 35), et/ou qu'un catalyseur (52), notamment un catalyseur en granulés (52), et/ou un catalyseur en poudre est chargé dans le tube (50) après que le ressort à barillet (4, 34) et le capteur de température (1, 31) aient été fixés dans le tube (50) par la détente du ressort à barillet (4, 34).
